# EUROPEAN PATENT SPECIFICATION

(11) **EP 2 246 114 B1**
(45) Date of publication and mention of the grant of the patent: **24.06.2015**
(21) Application number: 10305418.5
(22) Date of filing: 21.04.2010
(51) Int. Cl.: B02C 17/16, B02C 17/18

(54) **Media-agitation type pulverizer**
Rührwerkskugelmühle
Broyeur agitateur à charges broyantes

(30) Priority: 22.04.2009 JP 2009103529
(43) Date of publication of application: 03.11.2010
(73) Proprietor: Ashizawa Finetech Ltd, Chiba 275-8572 (JP)
(72) Inventor: Ishikawa, Tsuyoshi, Chiba-ken Chiba 275-8572 (JP)
(74) Representative: Catherine, Alain

(56) References cited:
- JP-A- 2008 149 208
- US-A- 5 346 147
- US-A- 6 029 915

## Description

The present invention relates to a media-agitation type pulverizer. The media-agitation type pulverizer is particularly suitably used, although not limitative, to mix a target material, such as ink, paint, pigment, ceramics, metal, inorganics, dielectrics, ferrite, toner, glass or paper coating color, with grinding media, to pulverize or disperse the material into fine particles.

A media-agitation mill, as proposed in JP 2005-199125 A, is known as the media-agitation type pulverizer.

The media-agitation mill proposed in JP 2005-199125A comprises a grinding container having a grinding chamber for receiving grinding media therein, a rotary shaft rotatably disposed in the grinding container, and an agitating/separating member disposed at the rotary shaft in a position located in the grinding container and adapted to rotate integrally with the rotary shaft, wherein the inner wall surface of the grinding chamber and the outer circumference of the agitating/separating member are formed in a shape to conform to each other. The media-agitation mill further comprises a separation/discharge passage extending from the outer circumference to the central portion of the agitating/separating member and then extending from the central portion through the central portion of the rotary shaft so as to communicate with the outside of the grinding chamber, and pressure reduction hole extending between the upper and lower surfaces of the agitating/separating member in the axial direction of the rotary shaft so as to provide communication between the upper and lower portions of the inside of the grinding member.

Another media-agitation type pulverizer having a similar structure is also described in JP 2008-149208.

In the above media-agitation mills of the aforementioned structure, however, the grinding media are apt to be locally concentrated in a maximum-diameter portion where a centrifugal force is maximized, and a dispersion or pulverization force will vary depending on the position with a large difference. Thus, there is a problem that the dispersion or pulverization of a target material is not uniformly performed to make it difficult to obtain a high-quality product.

It is, therefore, an object of the present invention to provide a media-agitation type pulverizer, which is enabled to acquire products of high quality by excellent pulverizing/dispersing actions.

The aforementioned object is achieved by a media-agitation type pulverizer of the present invention having the features as set forth in the following section (1). Additional preferred embodiments are detailed in sections (2) to (13).
(1) A media-agitation type pulverizer comprising: a grinding container having an upright-type cylindrical grinding chamber containing bead-shaped grinding media; a material slurry supply port formed in the grinding container; an agitating member disposed in the lower portion of said grinding chamber and having a shaft of rotation made substantially coaxial with said grinding chamber; and a media-separating member disposed in said grinding chamber and above said agitating member, wherein the improvement comprises a guide ring for dividing the lower portion of said grinding chamber radially into an inner portion and an annular outer portion thereby to form said lower-outer portion of said grinding chamber as a rising passage of a mixture of the grinding media and the material slurry.
(2) A media-agitation type pulverizer as set forth (1), wherein said guide ring has an annular space and is supported by a plurality of pipes mounted on said grinding container so that a coolant can be supplied to and discharged from said annular space via said pipes.
(3) A media-agitation type pulverizer as set forth in (2), wherein said pipes extend from above said grinding container and support said guide ring at the lower ends thereof.
(4) A media-agitation type pulverizer as set forth in (1) to (3), wherein said media-separating member is a centrifugal-type wheel-shaped separating member or screen.
(5) A media-agitation type pulverizer as set forth in (1) to (4), wherein said agitating member is an impeller including a pair of annular plates spaced vertically from each other, and a plurality of blades arranged therebetween.
(6) A media-agitation type pulverizer as set forth in (1) to (5), wherein said agitating member rotates at a circumferential speed of 5 - 40 m/s.
(7) A media-agitation type pulverizer as set forth in (1) to (6), wherein said guide ring has a lower end positioned at or higher than the upper end of said agitating member and an upper end positioned downward at a predetermined spacing from the lower end of said media-separating member.
(8) A media-agitation type pulverizer as set forth in (1) to (7), wherein the spacing between the outer circumference wall of said guide ring and the inner circumference wall of said grinding container is 10 to 50 mm.
(9) A media-agitation type pulverizer as set forth in (1) to (8), wherein the height of said guide ring is 1/3 to 1/2 of the height of said grinding chamber.
(10) A media-agitation type pulverizer as set forth in (1) to (9), wherein the total volume of said grinding media shares 30 % to 60 % of the volume of said grinding chamber.
(11) A media-agitation type pulverizer as set forth in (1) to (10), further comprising: a first drive shaft extending in the direction opposed to said media-separating member from said agitating member to the outside of said grinding container; a second drive shaft extending in the direction opposed to said agitating member from said media-separating member to the outside of said grinding container; and a flow conversion member arranged near the inner circumference wall of said grinding container, for converting that flow of said material and said grinding media, which is directed outward of the circumferential direction by the rotation of said agitating member, into a radially inward direction, wherein said agitating member and said media-separating member are arranged at such an axial spacing that the interference therebetween may be smaller, and wherein said second drive shaft is made of a hollow shaft, the inside of which communicates with the inside of said media-separating member thereby to form a material outlet passage.
(12) A media-agitation type pulverizer as set forth in (11), wherein the ratio S/d is 0.3 or more, if the spacing between said agitating member and said media-separating member is designated by S and if the diameter of said agitating member is designated by d.
(13) A media-agitation type pulverizer as set forth in (11) or (12), wherein the total volume of said grinding media is 60 % or less than the volume of said grinding container.

The media-agitation type pulverizer of the invention is provided with the guide ring in the grinding chamber, as described above, so that the grinding media can repeat regularly those operations, in which the grinding media move radially outward of the grinding chamber and toward the inner wall of the grinding container, while moving in the circumferential direction, then rise in the rising passage between the guide ring and the grinding container, then move downward from the central portion through the inside of the guide ring, and return to the agitating member. Even if the capacity ratio of the beads to the grinding chamber is small, the bead interval does not spread wide so that the pulverizing/dispersing efficiency can be improved. Thus, the segregation of the grinding media is less likely to occur, and a dispersion or pulverization force is kept uniform. This also makes it possible to achieve uniform dispersion thereby to obtain a high-quality product.

Moreover, the functional dispersion of the grinding portion and the media-separating portion is clarified to improve the media-separating performance.

In addition to the cooling of the outer cylinder of the grinding chamber, moreover, the cooling at the guide ring can be performed to improve the cooling capacity.
Fig. 1 is a sectional view showing a media-agitation type pulverizer according to a first embodiment of the invention;
Fig. 2 is a sectional view taken along line A - A of Fig. 1;
Fig. 3 is a sectional view showing a media-agitation type pulverizer according to a second embodiment of the invention;
Fig. 4 is a view for explaining an arrangement state of an agitating member and a flow conversion member; and
Figs. 5(A), 5(B) and 5(C) are sectional views showing individual examples of blade members of a media-separating member used in the media-agitation type pulverizer shown in Fig. 3 and Fig. 1.

With reference to the accompanying drawings, the present invention will now be described in connection with a media-agitation type pulverizer according to an embodiment thereof.

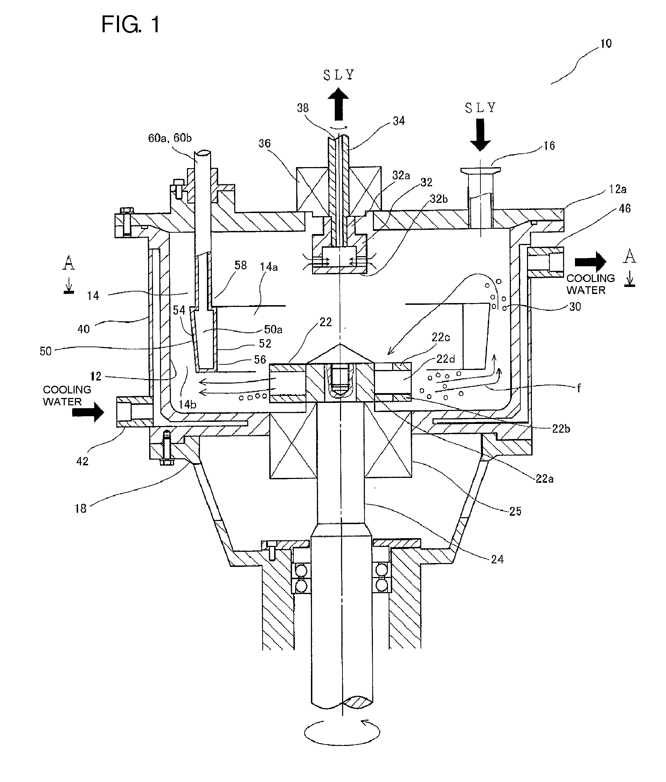

Fig. 1 shows a media-agitation type pulverizer 10 according to a first embodiment of the invention. The media-agitation type pulverizer 10 comprises an upright-type cylindrical grinding container 12 having an end plate 12a closing the upper portion of the pulverizer 10. The grinding container 12 has a cylindrical grinding chamber 14, which is equipped therein with a material slurry supply port 16 for introducing a target material in a slurry state, into the grinding chamber 14.

At the center of the lower portion of the inside of the grinding chamber 14 of the grinding container 12, there is rotatably arranged an agitating member 22, which is fixed as an impeller around a boss 22a, for example. The agitating member 22 is constituted of a pair of annular plates 22b and 22c arranged at a vertical spacing, and a plurality of blades 22d arranged between those plates.

To the agitating member 22, there is fixed a rotational drive shaft 24 acting as an agitating-member driving shaft, which is fixed at an upper end thereof to the boss 22a of the agitating member 22 and extends axially downward through the grinding container 12 and a frame 18. Although now shown, the rotational drive shaft 24 has a lower end connected to a driving source via a not-shown conventional drive mechanism, so that it is rotationally driven in a direction indicated by an arrow in Fig. 1. Preferably, the rotational drive shaft 24 is arranged to allow its rotation axis to pass through the center of the grinding chamber 14. Here, the rotational drive shaft 24 is equipped with a shaft sealing device 25 (e.g., a mechanical seal).

As well known in the media-agitation type pulverizer, bead-shaped grinding media 30 are contained in the grinding container 12 (although the grinding media 30 are extremely enlarged in Fig. 1). The grinding media 30 to be used may have a diameter of 0.02 to 2 mm. The total volume of the grinding media 30 shares 30 % to 60 % of the volume of the grinding chamber 14. In the ordinary media-agitation type pulverizer, the total volume of the grinding media is 75 % to 90 % of the volume of the grinding chamber. Thus, the media-agitation type pulverizer of the invention can perform soft pulverization and dispersion with a little constriction.

A centrifugal-type media-separating member 32 is rotatably disposed in an upper portion of the inside of the grinding chamber 14 of the grinding container 12 and axially spaced apart and opposed to the aforementioned agitating member, thereby to separate the grinding media 30 dispersed in the material slurry, from said target material. The media-separating member 32 is equipped with a boss 32a made of a cylindrical body having an internal space in a lower portion thereof, and a closing plate 32b for closing the lower portion of that body. The body of the boss 32a has a plurality of openings, through which the material slurry is exclusively introduced into the aforementioned space of the body. Although it is preferred that the media-separating member 32 is arranged in concentric relation to the aforementioned grinding member 22, these members may have axes out of alignment. It is also preferred that the aforementioned agitating member 22 is so sufficiently spaced from the media-separating member 32 as to reduce the interference of the media-separating member 32 extremely. A hollow rotational drive shaft 34 is fixed to that media-separating member 32. The rotational drive shaft 34 extends upward through the end plate 12a and has its end portion connected to the driving source through the not-shown known drive mechanism, so that it is rotationally driven in the direction, as indicated by arrow in Fig. 1. The rotational drive shaft 34 is equipped with a shaft sealing device 36 (e.g., a mechanical seal). Moreover, the hollow space of the drive shaft 34 communicates with the inside of the media-separating member 32 thereby to form a material slurry outlet 38. The aforementioned media-separating member can be exemplified by a conventional screen.

Around the outer circumference of the grinding container 12, there is mounted a jacket 40 for allowing a cooling medium or a heating medium (usually, a cooling medium such as a coolant) to flow therethrough, thereby to adjust the internal temperature of the grinding chamber 14. The jacket 40 is equipped at its lower portion with a coolant inlet 42 for introducing the coolant therethrough and at its upper portion with a coolant outlet 46 for discharging the coolant therefrom.

The grinding container 12 can be opened to facilitate maintenance by removing the aforementioned end plate 12a.

In the media-agitation type pulverizer of the invention, the aforementioned agitating member 22 can be driven at a rotating speed within a range of the circumferential speed of 5 to 40 m/s, and the media-separating member 32 can be driven at a rotating speed within a range of 10 to 20 m/s.

At a lower portion in the aforementioned grinding chamber 14, there is arranged a guide ring 50. This guide ring 50 is constituted to include an inner-circumference annular plate 52, an outer-circumference annular plate 54 spaced circumferentially from the former, a lower annular plate 56 forming the lower side and an upper annular plate 58 forming the upper side, and is made liquid-tight in the inside thereof.

The guide ring 50 divides the lower portion of the aforementioned grinding chamber 14 radially to form a lower-inner chamber portion 14a and a lower-outer annular chamber portion 14b. This lower-outer annular chamber portion 14b performs a function to provide a rising passage for the mixture of the grinding media and the material slurry.

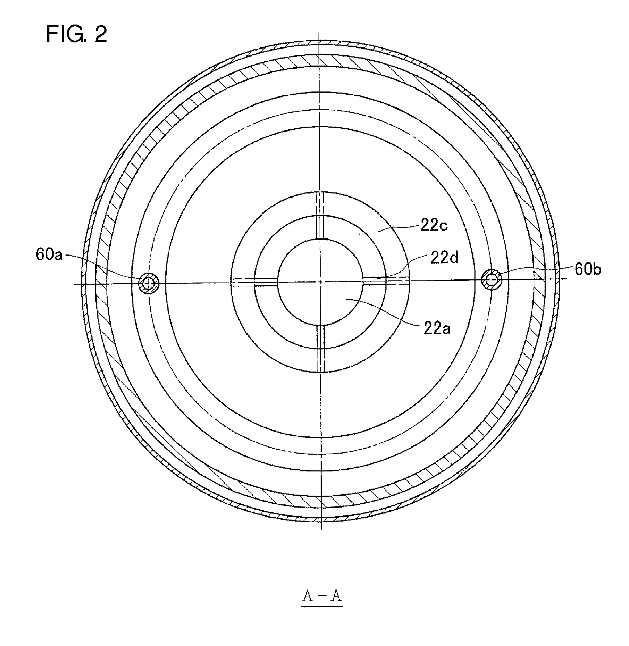

The guide ring 50 has the structure described above, and forms an annular space 50a. The guide ring 50 is supported by a plurality of pipes 60a and 60b (as referred to Fig. 2) mounted in the aforementioned grinding container, so that the coolant can be supplied to and discharged from the annular space by way of those pipes 60a and 60b. According to the invention, therefore, the material slurry can also be cooled from the inside of the grinding container 12.

It is preferred that the pipes 60a and 60b extend from above the grinding container 12, as shown, thereby to support the aforementioned guide ring 50 at their lower ends.

It is preferred that the aforementioned guide ring 50 has its lower end positioned at or higher than the upper end of the aforementioned agitating member 22 and its upper end positioned at a predetermined downward spacing from the lower end of the aforementioned media-separating member 32.

It is preferred that the spacing between the outer circumference wall of the guide ring 50 and the inner circumference wall of the grinding container 12 is 10 to 50 mm. That spacing constricts the bead movements excessively, if it is less than the aforementioned lower limit, and allows the degree of freedom excessively, if more than the aforementioned upper limit.

It is preferred that the height of the aforementioned guide ring 50 is 1/3 to 1/2 of the height of the grinding chamber 14. The height makes the control of the bead flow insufficient, if it is less than the aforementioned lower limit, and deteriorates the smoothness of the bead flow if more than the upper limit.

In the operations, the agitating member 22 is rotationally driven while introducing the material slurry containing the particles to be pulverized, from the material slurry supply port 16 into the grinding chamber 14. The slurry thus introduced into the grinding chamber 14 is moved as a falling flow toward the agitating member 22 while being carried on the rotating flow of the slurry and the media 30, which has already been formed in the grinding chamber 14, so that they are agitated and mixed by the agitating member 22. At this time, the slurry and the media 30 are moved radially outward to the inner wall of the grinding container 12. After this, the slurry and the media 30 thus agitated and mixed rise as a flow f in the rising passage between the inner wall of the grinding chamber 14 and the guide ring 50. The flow goes up to the uppermost position and then becomes the aforementioned falling flow. In the portion adjacent to and slightly above the central portion of the grinding chamber 14, rotational movements are applied to the slurry and the media by the media-separating member 32. By the rotational movements, the grinding media having relatively large masses are forced to move radially outward and are separated from the slurry. In this case, parts of the pulverized particles having relatively large particle sizes due to insufficient pulverization behave like the media. On the other hand, the slurry containing the remaining particles sufficiently pulverized and reduced in mass is introduced into the inner space of the media-separating member 32 and discharged to the outside of the media-agitation type pulverizer via the material outlet 38 in the rotational drive shaft 34. Thanks to this construction, in the aforementioned regular flows, the material particles are sufficiently pulverized and dispersed through contact with the freely-moving grinding media, so that a high-quality product is obtained. By the operations thus far described, the media-agitation type pulverizer of the invention can achieve the pulverization of a relatively small width of particle size distribution. Moreover, the quantity of the grinding media can be spared.

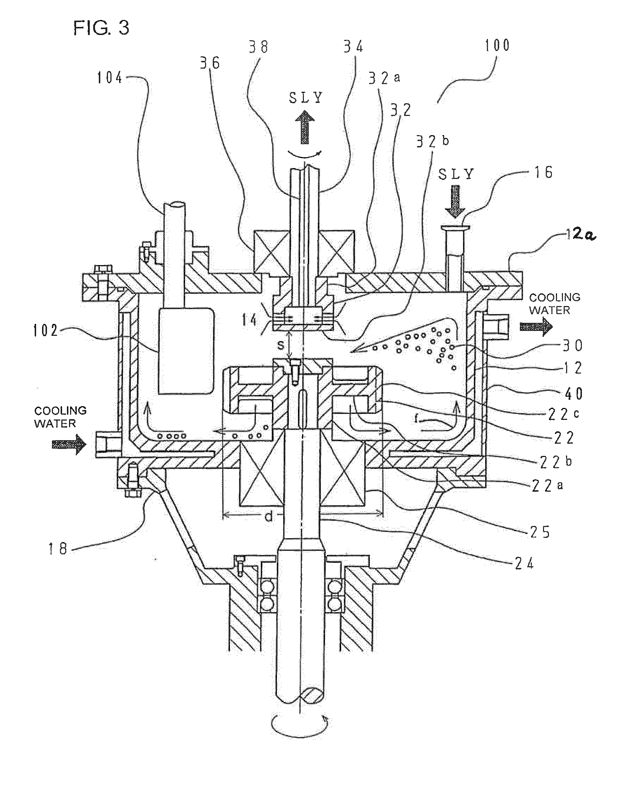

Fig. 3 shows a media-agitation type pulverizer 100 according to a second embodiment of the invention. The description of this media-agitation type pulverizer is omitted by designating the same parts and the same portions by the common reference numerals, since the structure is substantially common, excepting a flow conversion member 102 to be described later. Here, the media-agitation type pulverizer 100 of this embodiment is also equipped with the guide ring 50, although the guide ring 50 is omitted from Fig. 3.

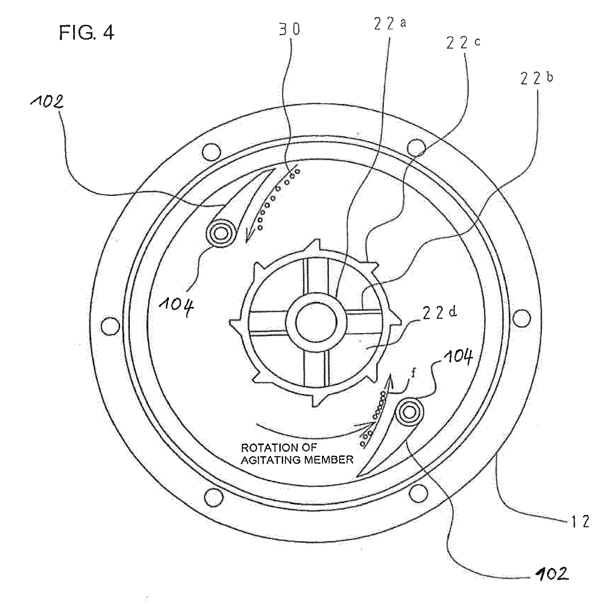

The flow conversion member 102 (although only one is shown in Fig. 3) is arranged in the upper portion near the inner circumference wall of the grinding chamber 14 of the aforementioned grinding container 12. The flow conversion member 102 is formed into the shape of a straightening plate acting to convert that flow of the material slurry and the grinding media 30, which has been directed outward of the circumferential direction by the rotation of the agitating member, into the radially inward direction. When the agitating member 22 has a high rotating speed, that flow conversion member 102 acts to prevent the grinding media 30 from being otherwise centrifugally brought into contact with the inner circumference wall of the grinding container 12. At least one, usually one or two, flow conversion member 102 is desirably arranged in the grinding chamber 14. It is preferred that the flow conversion member 102 has its lower end positioned substantially at or higher than the upper end of the agitating member 22 and its upper end extended to the vicinity of the end plate 12a. It is also preferred that the flow conversion member 102 has a horizontal sectional shape made the thinner as it comes the closer to the inner circumference wall of the grinding container 12, as shown in Fig. 4 (from which the guide ring 50 is also omitted).

The flow conversion member 102 is preferably equipped at its root portion with a rod-shaped member 104, which has an upper end protruding to the outside of the grinding container 12 so that the angle or height position of the flow conversion member 102 can be adjusted from the outside of the grinding container 12.

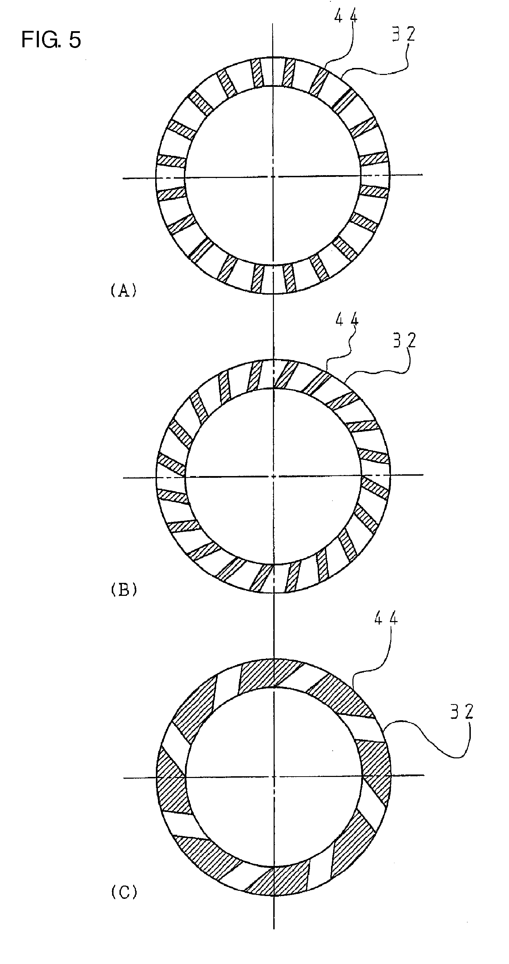

On the other hand, the aforementioned media-separating member 32 is equipped with a plurality of blade members 44 (as referred to Fig. 5(A)), which are arranged equidistantly in the circumferential direction (coaxially with the rotational drive shaft 34) between the boss 32a and the closing plate 32b. The blade members 44 may be arranged either completely radially, as shown in Fig. 5(A), or obliquely, as shown in Fig. 5(B). Alternatively, the blade members 44 may be made so quadrangular that their sections become gradually thinner toward the inside, as shown in Fig. 5(C).

It is preferred that the ratio S/d is 0.3 or more, especially 0.3 to 0.6, if the spacing between the agitating member 22 and the media-separating member 32 is designated by S and if the diameter of the agitating member 22 is designated by d. If the aforementioned ratio S/d is less than 0.3, the extent of the interference between the agitating member and the media-separating member is undesirable.

It is preferred that the total volume of the grinding media 30 is 60 % or less, especially 30 to 50 % of the volume of the aforementioned grinding container 12 (or the grinding chamber 14). If the total volume of the grinding media 30 exceeds 60 % of the volume of the grinding container 12 (or the grinding chamber 14), the degree of freedom of the grinding media 30 is lost to make the control of the grinding media 30 difficult. Moreover, it is desired that the pouring horizontal height of the grinding media 30 is lower than the height of the media-separating member 32. If the pouring horizontal height of the grinding media exceeds the height of the media-separating member, the separability of the grinding media by the media-separating member drops.

In the media-agitation type pulverizer according to the embodiment of the invention, the agitating member 22 can be driven at a rotating speed within a range of 5 to 40 m/s, and the media-separating member 32 can be driven at a rotating speed within a range of 10 to 20 m/s.

In the operations, the agitating member 22 is rotationally driven while introducing the material or the slurry containing the particles to be pulverized, from the material slurry supply port 16. The slurry thus introduced into the grinding chamber 14 is moved toward the agitating member 22 while being carried on the rotating flow f of the slurry and the media 30, which has already been formed in the grinding chamber 14, so that they are agitated. The flow, which rotates radially outward while rising in the passage between the agitating member 22 and the guide ring 50, is converted into a radially inward one by the action of the flow conversion member 102, thereby to form the rotating flow f of the slurry and the media 30. By this rotating flow f of the grinding media, the particles to be pulverized in the slurry are pulverized or dispersed in the grinding chamber 14. In the portion above the grinding chamber 14, the rotational movements are applied to the slurry and the media by the media-separating member 32. By these rotational movements, the grinding media having the relatively large masses are forced to move radially outward and are separated from the slurry. In this case, parts of the pulverized particles having relatively large particle sizes due to insufficient pulverization behave like the media. On the other hand, the slurry containing the remaining particles sufficiently pulverized and reduced in mass is introduced into the inner space of the media-separating member 32 and discharged to the outside of the media-agitation mill via the material outlet 38 in the rotational drive shaft 34. This constitution makes it possible to achieve the pulverization of a small width of particle size distribution.

## Claims

1. Media-agitation type pulverizer (10; 100) comprising:
- an upright-type cylindrical grinding container (12) having a cylindrical grinding chamber (14) containing bead-shaped grinding media (30);
- a material slurry supply port (16) formed in the grinding container (12);
- an agitating member (22) disposed in the lower portion of said grinding chamber (14) and having a shaft of rotation (24) made substantially coaxial with said grinding chamber (14); and
- a media-separating member (32) disposed in said grinding chamber (14) and above said agitating member (22),
**characterized in that** said media-agitation type pulverizer (10; 100) comprises a guide ring (50) which is arranged in the lower portion of said grinding chamber (14) so as to divide said lower portion radially into a lower-inner chamber portion (14a) and a lower-outer annular chamber portion (14b), said lower-outer annular chamber portion (14b) providing a rising passage for a mixture of the grinding media (30) and the material slurry (SLY).

2. Media-agitation type pulverizer (10; 100) according to claim 1, wherein said guide ring (50) has an annular space (50a) and is supported by a plurality of pipes (60a, 60b) mounted on said grinding container (12) so that a coolant can be supplied to and discharged from said annular space (50a) via said pipes (60a, 60b).

3. Media-agitation type pulverizer (10; 100) according to claim 2, wherein said pipes extend from above said grinding container (12) and support said guide ring (50) at the lower ends thereof.

4. Media-agitation type pulverizer (10; 100) according to anyone of claims 1 to 3, wherein said media-separating member (32) is a centrifugal-type wheel-shaped separating member or screen.

5. Media-agitation type pulverizer (10) according to anyone of claims 1 to 4, wherein said agitating member (22) is an impeller including a pair of annular plates (22b, 22c) spaced vertically from each other, and a plurality of blades (22d) arranged therebetween.

6. Media-agitation type pulverizer (10; 100) according to anyone of claims 1 to 5, wherein said agitating member (22) rotates at a circumferential speed of 5 - 40 m/s.

7. Media-agitation type pulverizer (10; 100) according to anyone of claims 1 to 6, wherein said guide ring (50) has a lower end positioned at or higher than the upper end of said agitating member (22) and an upper end positioned downward at a predetermined spacing from the lower end of said media-separating member (32).

8. Media-agitation type pulverizer (10; 100) according to anyone of claims 1 to 7, wherein the spacing between the outer circumference wall of said guide ring (50) and the inner circumference wall of said grinding container (12) is 10 to 50 mm.

9. Media-agitation type pulverizer (10; 100) according to anyone of claims 1 to 8, wherein the height of said guide ring (50) is 1/3 to 1/2 of the height of said grinding chamber (14).

10. Media-agitation type pulverizer (10; 100) according to anyone of claims 1 to 9, wherein the total volume of said grinding media (30) shares 30 % to 60 % of the volume of said grinding chamber (14).

11. Media-agitation type pulverizer (100) according to anyone of claims 1 to 10, wherein said shaft of rotation (24) extends in the direction opposed to said media-separating member (32) from said agitating member (22) to the outside of said grinding container (12); a drive shaft (34) is fixed to said media-separating member (32) and extends in the direction opposed to said agitating member (22) from said media-separating member (32) to the outside of said grinding container (12); said media-agitation type pulverizer further comprising a flow conversion member (102) arranged near the inner circumference wall of said grinding container (12), for converting that flow of said material and said grinding media (30), which is directed outward of the circumferential direction by the rotation of said agitating member (22), into a radially inward direction, wherein said agitating member (22) and said media-separating member (32) are arranged at such an axial spacing that the interference therebetween may be smaller, and wherein said drive shaft (34) is made of a hollow shaft, the inside of which communicates with the inside of said media-separating member (32) thereby to form a material outlet passage (38).

12. Media-agitation type pulverizer (100) according to claim 11, wherein the ratio S/d is 0.3 or more, if the spacing between said agitating member (22) and said media-separating member (32) is designated by S and if the diameter of said agitating member (22) is designated by d.

13. Media-agitation type pulverizer (100) according to claim 11 or 12, wherein the total volume of said grinding media (30) is 60 % or less than the volume of said grinding container (12).

## Patentansprüche

1. Rührwerkskugelmühle (10; 100) mit
- einem aufrecht stehenden zylindrischen Mahlbehälter (12), der eine zylindrische Mahlkammer (14) aufweist, die kugelförmige Mahlmittel (30) enthält,
- einer in dem Mahlbehälter (12) geformten Materialbreizugangsöffnung (16),
- einem Rührorgan (22), das im unteren Abschnitt der Mahlkammer (14) angeordnet ist und eine zur Mahlkammer (14) im Wesentlichen koaxiale Drehwelle (24) aufweist, und
- einem Mahlmitteltrennorgan (32), das in der Mahlkammer (14) und oberhalb des Rührorgans (22) angeordnet ist,
**dadurch gekennzeichnet, daß** die Rührwerkskugelmühle (10; 100) einen Führungsring (50) aufweist, der im unteren Abschnitt der Mahlkammer (14) so angeordnet ist, daß er den unteren Abschnitt radial in einen inneren unteren Kammerabschnitt (14a) und einen äußeren unteren, ringförmigen Kammerabschnitt (14b) aufteilt, wobei der äußere untere, ringförmige Kammerabschnitt (14b) einen Aufstiegsdurchgang für eine Mischung aus Mahlmittel (30) und Materialbrei (SLY) bereitstellt.

2. Rührwerkskugelmühle (10; 100) gemäß Anspruch 1, **dadurch gekennzeichnet, daß** der Führungsring (50) einen ringförmigen Raum (50a) aufweist und von einer Mehrzahl von Röhren (60a, 60b) getragen ist, die an dem Mahlbehälter (12) so angebracht sind, daß ein Kühlmittel dem ringförmigen Raum (50a) über die Röhren (60a, 60b) zugeführt und aus diesem abgeführt werden kann.

3. Rührwerkskugelmühle (10; 100) gemäß Anspruch 2, **dadurch gekennzeichnet, daß** sich die Röhren von oberhalb des Mahlbehälters (12) aus erstecken und den Führungsring (50) an deren unteren Enden tragen.

4. Rührwerkskugelmühle (10; 100) gemäß einem der Ansprüche 1 bis 3, **dadurch gekennzeichnet, daß** das Mahlmitteltrennorgan (32) ein zentrifugenartiges radförmiges Trennorgan oder -gitter ist.

5. Rührwerkskugelmühle (10) gemäß einem der Ansprüche 1 bis 4, **dadurch gekennzeichnet, daß** das Rührorgan (22) ein Drehflügel mit einem Paar ringförmiger, voneinander senkrecht beabstandeter Platten (22b, 22c) mit einer Mehrzahl dazwischen angeordneter Blätter (22d) ist.

6. Rührwerkskugelmühle (10; 100) gemäß einem der Ansprüche 1 bis 5, **dadurch gekennzeichnet, daß** sich das Rührorgan (22) mit einer Umfangsgeschwindigkeit von 5 bis 40 m/s dreht.

7. Rührwerkskugelmühle (10; 100) gemäß einem der Ansprüche 1 bis 6, **dadurch gekennzeichnet, daß** ein unteres Ende des Führungsrings (50) gleich hoch wie oder höher als das obere Ende des Rührorgans (22) und ein oberes Ende des Führungsrings mit einem vorbestimmten Abstand unterhalb des unteren Endes des Mahlmitteltrennorgans (32) angeordnet sind.

8. Rührwerkskugelmühle (10; 100) gemäß einem der Ansprüche 1 bis 7, **dadurch gekennzeichnet, daß** der Abstand zwischen der äußeren Umfangswand des Führungsrings (50) und der inneren Umfangswand des Mahlbehälters (12) 10 bis 50 mm beträgt.

9. Rührwerkskugelmühle (10; 100) gemäß einem der Ansprüche 1 bis 8, **dadurch gekennzeichnet, daß** die Höhe des Führungsrings (50) ein Drittel bis die Hälfte der Höhe der Mahlkammer (14) beträgt.

10. Rührwerkskugelmühle (10; 100) gemäß einem der Ansprüche 1 bis 9, **dadurch gekennzeichnet, daß** das Gesamtvolumen der Mahlmittel (30) 30 % bis 60 % des Volumens der Mahlkammer (14) beträgt.

11. Rührwerkskugelmühle (100) gemäß einem der Ansprüche 1 bis 10, **dadurch gekennzeichnet, daß** sich die Drehwelle (24) in der dem Mahlmitteltrennorgan (32) entgegengesetzten Richtung vom Rührorgan (22) nach außerhalb des Mahlbehälters (12) erstreckt, eine Antriebswelle (34) am Mahlmitteltrennorgan (32) befestigt ist und sich in der zum Rührorgan (22) entgegengesetzten Richtung vom Mahlmitteltrennorgan (32) nach außerhalb des Mahlbehälters (12) erstreckt, wobei die Rührwerkskugelmühle außerdem ein nahe der inneren Umfangswand des Mahlbehälters (12) angeordnetes Flußumlenkorgan (102) zum Umlenken des Flusses des Materials und der Mahlmittel (30), der durch die Drehung des Rührorgans (22) in Umfangsrichtung nach außen gerichtet ist, in eine radial nach innen gerichtete Richtung aufweist, wobei das Rührorgan (22) und das Mahlmitteltrennorgan (32) in einem solchen axialen Abstand angeordnet sind, daß eine Interferenz zwischen beiden kleiner ist, und wobei die Antriebswelle (34) aus einem hohlen Schaft besteht, dessen Innenseite mit dem Inneren des Mahlmitteltrennorgans (32) kommuniziert und so einen Materialausgangsdurchgang (38) bildet.

12. Rührwerkskugelmühle (100) gemäß Anspruch 11, **dadurch gekennzeichnet, daß** das Verhältnis S/d 0,3 oder mehr ist, wenn der Abstand zwischen dem Rührorgan (22) und dem Mahlmitteltrennorgan (32) mit S und der Durchmesser des Rührorgans (22) mit d bezeichnet sind.

13. Rührwerkskugelmühle (100) gemäß Anspruch 11 oder 12, **dadurch gekennzeichnet, daß** das Gesamtvolumen der Mahlmittel (30) 60 % oder weniger des Volumens des Mahlbehälters (12) beträgt.

## Revendications

1. Broyeur agitateur à charges broyantes (10 ; 100) comprenant :
- un contenant de broyage (12) cylindrique de type vertical ayant une chambre de broyage (14) contenant des charges broyantes (30) en forme de billes,
- une entrée de coulis de matière (16) formée dans le contenant de broyage (12),
- un organe d'agitation (22) disposé dans la partie inférieure de la chambre de broyage (14) et comportant un axe de rotation (24) sensiblement coaxial à ladite chambre de broyage (14), et
- un organe de séparation (32) des charges broyantes disposé dans la chambre de broyage (14) et au-dessus de l'organe d'agitation (22), **caractérisé en ce que** le broyeur agitateur à charges broyantes (10 ; 100) comprend un anneau de guidage (50) qui est disposé dans la partie inférieure de la chambre de broyage (14) de façon à diviser ladite partie inférieure radialement en une partie annulaire inférieure intérieure de chambre (14a) et une partie annulaire inférieure extérieure de chambre (14b), la partie annulaire inférieure extérieure de chambre (14b) donnant un passage montant pour un mélange des charges broyantes (30) avec le coulis de matière (SLY).

2. Broyeur agitateur à charges broyantes (10 ; 100) selon la revendication 1, **caractérisé en ce que** l'anneau de guidage (50) comporte un espace annulaire (50a) et est supporté par une pluralité de tubes (60a, 60b) montés sur le contenant de broyage (12) de façon qu'un liquide de refroidissement puisse être emmené à et évacué de l'espace annulaire (50a) via les tubes (60a, 60b).

3. Broyeur agitateur à charges broyantes (10 ; 100) selon la revendication 2, **caractérisé en ce que** les tubes s'étendent à partir d'au-dessus du contenant de broyage (12) et portent l'anneau de guidage (50) à leurs extrémités inférieures.

4. Broyeur agitateur à charges broyantes (10 ; 100) selon l'une des revendications 1 à 3, **caractérisé en ce que** l'organe de séparation des charges broyantes (32) est un organe ou une grille de séparation de type centrifuge et de roue.

5. Broyeur agitateur à charges broyantes (10) selon l'une des revendications 1 à 4, **caractérisé en ce que** l'organe d'agitation (22) est une hélice comportant une paire de plaques annulaires (22b, 22c) verticalement espacées l'une de l'autre et une pluralité de pales (22d) disposées entre les deux.

6. Broyeur agitateur à charges broyantes (10 ; 100) selon l'une des revendications 1 à 5, **caractérisé en ce que** l'organe d'agitation (22) tourne avec une vitesse circonférentielle de 5 à 40 m/s.

7. Broyeur agitateur à charges broyantes (10 ; 100) selon l'une des revendications 1 à 6, **caractérisé en ce qu'**un bord inférieur de l'anneau de guidage (50) est disposé au même niveau ou plus haut que le bord supérieur de l'organe d'agitation (22) et un bord supérieur de l'anneau est disposé plus bas à une distance prédéterminée du bord inférieur de l'organe de séparation (32) des charges broyantes.

8. Broyeur agitateur à charges broyantes (10 ; 100) selon l'une des revendications 1 à 7, **caractérisé en ce que** l'écart entre la paroi circonférentielle extérieure de l'anneau de guidage (50) et la paroi circonférentielle intérieure du contenant de broyage (12) est de 10 à 50 mm.

9. Broyeur agitateur à charges broyantes (10 ; 100) selon l'une des revendications 1 à 8, **caractérisé en ce que** la hauteur de l'anneau de guidage (50) et un tiers à la moitié de la hauteur de la chambre de broyage (14).

10. Broyeur agitateur à charges broyantes (10 ; 100) selon l'une des revendications 1 à 9, **caractérisé en ce que** le volume total des charges broyantes (30) correspond à 30 % à 60 % du volume de la chambre de broyage (14).

11. Broyeur agitateur à charges broyantes (100) selon l'une des revendications 1 à 10, **caractérisé en ce que** l'axe de rotation (24) s'étend, dans la direction opposée à l'organe de séparation des charges broyantes (32), de l'organe d'agitation (22) jusqu'à l'extérieur du contenant de broyage (12), un axe d'entraînement (34) est fixé à l'organe de séparation des charges broyantes (32) et s'étend, dans la direction opposée à l'organe d'agitation (22), de l'organe de séparation des charges broyantes (32) jusqu'à l'extérieur du contenant de broyage (12), le broyeur agitateur à charges broyantes comprenant en outre un organe de redirection de flux (102) agencé proche de la paroi circonférentielle intérieure du contenant de broyage (12) pour rediriger le flux de la matière et des charges broyantes (30), qui est dirigé vers l'extérieur par rapport à la direction circonférentielle par la rotation de l'organe d'agitation (22), dans une direction radialement vers l'intérieur, **en ce que** l'organe d'agitation (22) et l'organe de séparation des charges broyantes (32) sont disposés à une distance axiale telle qu'une interférence entre les deux soit plus faible, et **en ce que** l'axe d'entraînement (34) est réalisé en un arbre creux dont l'intérieur communique avec l'intérieur de l'organe de séparation des charges broyantes (32) afin de former un passage de sortie de matière (38).

12. Broyeur agitateur à charges broyantes (100) selon la revendication 11, **caractérisé en ce que** le rapport S/d est de 0,3 ou plus, si l'écart entre l'organe d'agitation (22) et l'organe de séparation des charges broyantes (32) est référencé en S et si le diamètre de l'organe d'agitation (22) est référencé en d.

13. Broyeur agitateur à charges broyantes (100) selon la revendication 11 ou 12, **caractérisé en ce que** le volume total des charges broyantes (30) est 60 % ou moins du volume du contenant de broyage (12).
